# EUROPÄISCHE PATENTSCHRIFT

(11) **EP 0 957 373 B1**
(45) Veröffentlichungstag und Bekanntmachung des Hinweises auf die Patenterteilung: **22.02.2012**
(21) Anmeldenummer: 99107930.2
(22) Anmeldetag: 22.04.1999
(51) Int. Cl.: G01S 15/88, G01S 15/02, B60G 11/27, G01L 11/06, B60G 17/052, G01S 7/52

(54) **Berührungslose Abstands- und Druckmessung innerhalb einer Luftfeder**
Contactless measurement of distance and pressure inside an air spring
Mesure de distance et de pression sans contact dans l'intérieur d'un ressort pneumatique

(30) Priorität: 09.05.1998 DE 19820877
(43) Veröffentlichungstag der Anmeldung: 17.11.1999
(73) Patentinhaber: ContiTech Luftfedersysteme GmbH, 30165 Hannover (DE)
(72) Erfinder: Fischer, Norbert, 31319 Sehnde (DE); Altsinger, Roland Dr., 31303 Burgdorf (DE)

(56) Entgegenhaltungen:
- DE-C- 19 700 966
- US-A- 4 543 649
- US-A- 4 798 369
- US-A- 4 938 066

## Beschreibung

Die Erfindung betrifft ein Ultraschall-Impuls/EchoVerfahren und eine entsprechnde Vorrichtung zur berührungslosen Messung des Abstands zwischen der Achse und dem Aufbau eines luftgefederten Fahrzeugs - gemäß den Oberbegriffen der Ansprüche 1 und 3.

Luftfedern sind als tragende Teile im Fahrzeug zwischen Achse und Aufbau angeordnet. Da sich der Abstand zwischen Aufbau und Achse auch bei unterschiedlichen Beladungszuständen nicht ändern soll, ist es erforderlich, die Luftfederhöhe zu messen und bei Abweichungen das System durch Aufpumpen bzw. Ablassen von Luft nachzuregeln. Auch für mehrachsige Fahrzeuge ist zur optimalen Ausnutzung der Achslasten eine Luftfederregelung erforderlich.

Gegenstand der Erfindung ist eine Luftfeder, bei der die jeweilige Fahrhöhe mit Hilfe einer Ultraschall-Laufzeitmessung innerhalb der Luftfeder unter zusätzlicher Verwendung mindestens einer Referenzstrecke bestimmt werden soll.

Luftultraschall-Abstandsmessung wird z. B. bei der Füllstandsmessung von Behältern, zur Vermessung von Wohnräumen, zur Abstandsmessung beim Einparken eines Kraftfahrzeugs, zur Entfernungsmessung bei Autofokus-Fotoapparaten usw. eingesetzt.

In der Offenlegungsschrift DE 34 23 602 A1 wird eine Vorrichtung zur Messung des Abstands zwischen der Karosserie und der Achse eines Fahrzeugs unter Verwendung eines als Sende/Empfänger ausgebildeten Ultraschall-Meßsystems vorgeschlagen.
Die Vorteile bei der Verwendung von Ultraschall innerhalb von Luftfedern liegen darin, daß innerhalb des Luftfederbalgs keine Verwirbelung der Schallwellen durch Fahrtwind möglich ist und daß durch den in der Luftfeder herrschenden überdruck eine sehr gute Reichweite der Ultraschallwellen auch bei höheren Frequenzen möglich ist.

Andererseits besteht bei der Abstandsmessung innerhalb der Luftfederkammer das Problem, daß in den Luftfedern Druckunterschiede zwischen 0 und ca 20 bar und Temperaturbereiche zwischen -40 °C und +120 °C zu bewältigen sind. Da die Schallgeschwindigkeit in einem realen Gas, wie hier die eingepumpte Luft, in starkem Maße temperatur- und in geringerem Maße druckabhängig ist, ergeben sich somit beträchtliche Fehler bei der Abstandsberechnung, wenn man eine fest vorgegebene Schallgeschwindigkeit zugrunde legt.

Um solche Fehler zu vermeiden, wird in der US-Patentschrift 4.798.369 vorgeschlagen, mittels einer Rechnerschaltung eine Kompensation von Druck- und Temperaturabhängigkeit vorzunehmen.
Wie dies im einzelnen zu geschehen hat, wird nicht näher erläutert.

Die DE-OS 36 20 957 beschreibt eine Luftfeder mit einem Ultraschall-Impuls/Echo-System zur Höhenmessung. Um die Auswirkungen von Laufgeschwindigkeitsänderungen der Impulse (die durch Luftdruck-, Temperatur- und Feuchtigkeitsänderungen im Innern des Balges auftreten können) auszuschalten, wird ein zusätzliches Fest-Target vorgeschlagen. Hiermit wird ein Relativwert der Laufzeiten bestimmt. Zur Berechnung der Fahrhöhe ist bei diesem Relativverfahren die Kenntnis der (momentanen) Schallgeschwindigkeit nicht erforderlich.

Der Nachteil bei solch einer Relativmethode unter Verwendung einer Referenzstrecke, wie sie in vergleichbarer Weise auch von einem Teleskopstoßdämpfer (G 87 02 817.4) her bekannt ist, besteht insbesondere darin, daß die technisch bedeutungsvollen Größen Druck und Temperatur nicht explizit zur Anzeige gelangen. Das Gebrauchsmuster G 87 02 817.4 schlägt lediglich vor, zur Temperaturkompensation Thermistoren zu installieren. Einzelheiten werden auch hier nicht genannt.

Der Federdruck der für den Beladungszustand des Fahrzeugs, der Radlast usw. von Interesse ist, kann mit keiner der genannten Luftfeder-Meßanordnungen bestimmt werden.

Es sind Luftfedersysteme im Einsatz, bei denen zur Druckmessung innerhalb des Luftfedervolumens separate Druckaufnehmer auf DMS-Basis bzw. als Piezo-Aufnehmer vorgesehen sind, bei denen mechanische Verformungen einer Membran eine Widerstandsänderung von applizierten Widerstandselementen bzw. eine Verschiebung elektrischer Ladungen verursachen.

Aus der DE 197 00 966 C1 ist eine Einrichtung zur berührungslosen Abstands- und Druckmessung innerhalb einer Luftfeder bekannt, wobei eine Ultraschall-Anordnung die aus einer dem Chassis zugeordneten Sende/Empfangskomponente mit einem ersten Reflektor zur Bildung einer ersten Referenzstrecke sᵣ₁ und einem achsfesten Reflektor zur Bildung einer Meßstrecke sᵣ₁ besteht, ist die Sende/Empfangskomponente mit dem ersten Reflektor in einem chassisfesten Rohrstutzen mittels einer Aufhängung elastisch gelagert, und am chassisfesten Rohrstutzen ist ein zweiter gehäusefester Reflektor zur Bildung einer zweiten Referenzstrecke sᵣ₂ angeordnet.
Durch einen Vergleich der den beiden Referenzstrecken sᵣ₁ und sᵣ₂ zugeordneten Laufzeiten läßt sich die durch den Innendruck verursachte Verschiebung des elastisch gelagerten Schallwandlers angeben, und damit der Innendruck in der Luftfeder bestimmen.
Da die Nachgiebigkeit der elastischen Aufhängung ein entscheidender Faktor zur Bestimmung des Drucks darstellt, ist hierfür eine große Präzision bezüglich der Einhaltung der geometrischen Abmessungen sowohl des akustischen Lagers als auch seiner Einfassung erforderlich. Um eine Beeinträchtigung der Elastizität durch Schmutz zu vermeiden, sollte die Oberfläche des elastischen Lagers stets saubergehalten werden. Bezüglich der Alterungsbeständigkeit des Elastizitätsmoduls liegen keine Untersuchungsergebnisse vor.

Aufgabe der vorliegenden Erfindung ist es, eine Luftfeder mit einem - alternativen - Ultraschall-Impuls/Echo-Meßsystem zu beschreiben, bei dem ebenfalls mit Hilfe eines einzigen Verfahrens bzw. mit einer einzigen Vorrichtung sowohl die exakte Höhe der Feder als auch der in der Feder herrschende Druck angegeben werden kann. Dabei soll auf die Verwendung von elastischen Materialien weitgehend verzichtet werden.

Diese Aufgabe ist durch das im Anspruch 1 genannte Verfahren und die entsprechende, im Anspruch 3 genannte Vorrichtung gelöst. Vorteilhafte Weiterbildungen sind in den Unteransprüchen beschrieben.

Erfindungsgemäß wird der zur Bestimmung der in der Luftkammer tatsächlich vorliegenden Schallgeschwindigkeit erforderliche Luftdruck nicht mit einem separat angeordneten Druckmesser bestimmt, sondern die Erfindung geht von der Erkenntnis aus, daß der in der Luftfeder herrschende Luftdruck eine direkte Auswirkung auf die Amplitude des empfangenen Ultraschallsignals hat.

Zur Lösung der gestellten Aufgabe wird vom bekannten Stand der Technik ausgegangen, wonach die Höheninformation zur Bestimmung des Abstands zwischen Achse und Aufbau mit Hilfe einer innerhalb des Luftfederbalgs angeordneten, aus US-Sender und US-Sensor bestehenden Laufzeitmeßvorrichtung besteht.
Die Erfindung benutzt nun solch ein Meßsystem zur Ermittlung der Federhöhe aus der Laufzeit eines Ultraschallsignals unter Berücksichtigung des in der Feder herrschenden Drucks.

Bei der erfindungsgemäßen Vorrichtung wird mit einer einzigen Anordnung sowohl die Laufzeit des Ultraschallsignals als auch der in der Feder herrschende Druck gemessen. Dabei wird die Schall-Laufzeit in bekannter Weise nach der Impuls/Echo-Methode gemessen. Für die Bestimmung des Luftfederinnendruckes wird der Effekt ausgenutzt, wonach die Schallintensität des Echosignals vom jeweiligen, in der Feder herrschenden Druck abhängig ist. Und zwar bewirkt eine Erhöhung des Drucks eine Erhöhung des Echosignalpegels.

Da die vom Ultraschallsensor aufgenommene Schallamplitude nicht nur vom Luftfederinnendruck sondern auch von der Schallwandlerausführung, der akustischen Anpassung, der Versorgungsspannung und anderer Einflußgrößen abhängt, wird mit Hilfe einer Regeleinheit und eines ersten Referenzreflektors dafür gesorgt, daß die gemessene Intensität des von diesem Reflektor zurückgeworfenen Echos immer konstant bleibt.
Dazu wird entweder die Sendeleistung oder die Verstärkung geregelt. Nun wird die von einem zweiten Referenzreflektor zurückgeworfene Echoamplitude gemessen. Zusammen mit einem aus der Laufzeit geschätzten Temperaturwert wird der Druck berechnet, der wiederum zur genauen Bestimmung der tatsächlich gegebenen Schallgeschwindigkeit und schließlich zur Bestimmung der Federhöhe dient. D. h. außer der Bestimmung der Federhöhe wird auch gleichzeitig die Bestimmung des Parameters Druck mit einer einzigen Anordnung möglich.

Vorzugsweise wird der erste Reflektor von einem ersten Drahtbügel und der zweite Reflektor von einem zweiten Drahtbügel gebildet.
Verglichen mit einem Target in Form einer ebenen, an einem Stengel befestigten Metallscheibe haben die erfindungsgemäßen Drahtbügel-Reflektoren eine größere Stabilität, was im rauhen Fahrbetrieb von besonderer Bedeutung ist. Auch sind aus Draht gebildete Reflektoren besonders einfach und billig herstellbar.

Ein Ausführungsbeispiel der Erfindung wird anhand der beigefügten Zeichnungen erläutert.

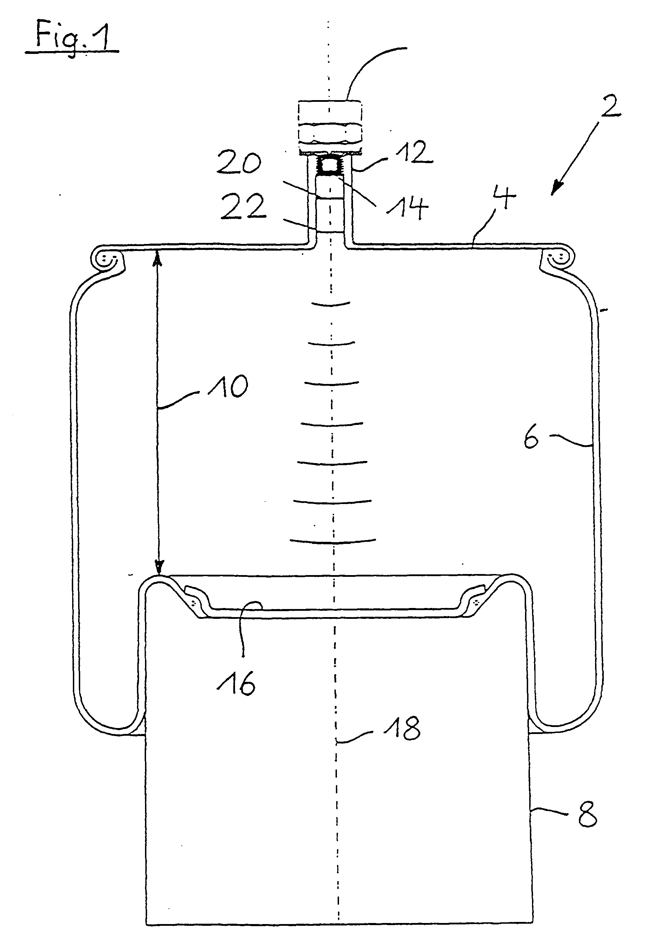

Fig. 1 zeigt eine mit einem erfindungsgemäßen Meßsystem versehene Luftfeder im Längsschnitt;
Fig. 2 zeigt ein Blockschaltbild der für das erfindungsgemäße Meßsystem vorgesehenen Elektronik;

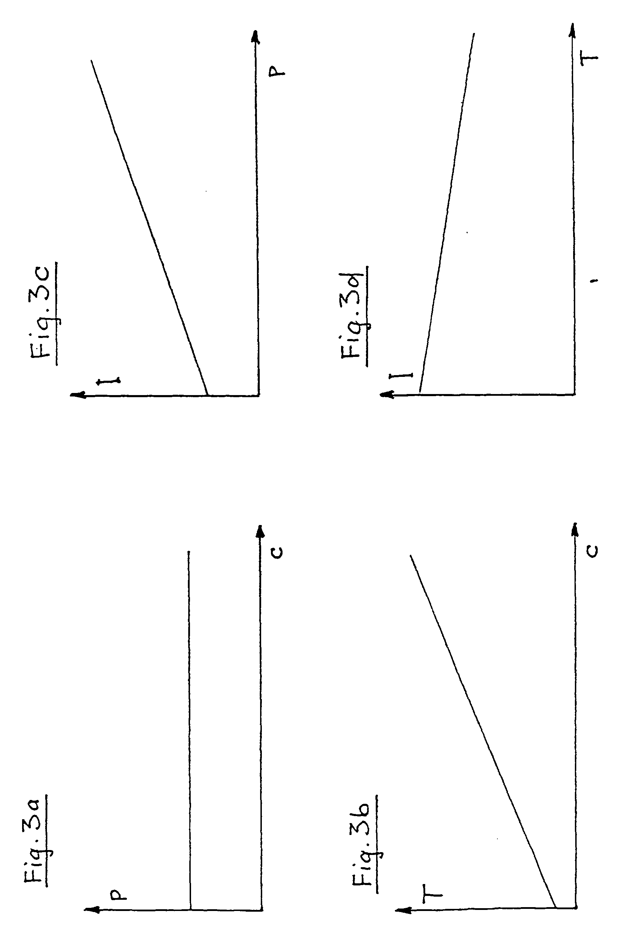

Fig. 3a, 3b, 3c und 3d stellen Diagramme dar, die die verschiedenen Abhängigkeiten von Druck, Temperatur, Schallgeschwindigkeit und Intensität aufzeigen, und zwar Fig 3a die sehr geringe Abhängigkeit der
Schallgeschwindigkeit c vom Druck p;
Fig. 3b die starke Abhängigkeit der Schallgeschwindigkeit c von der Temperatur T;
Fig. 3c die Druckabhängigkeit der Schalleitung (Intensität I); und
Fig. 3d den Einfluß der Temperatur T auf die Schalleitung (Intensität I).

üblicherweise besteht eine Luftfeder 2 im wesentlichen aus einer Abdeckplatte 4, einem Rollbalg 6 und einem Abrollkolben 8. Die Abdeckplatte 4 ist am Fahrzeuglängsträger (nicht dargestellt) chassisfest angebracht. Der Abrollkolben 8 ist achsseitig (radseitig) befestigt. Beim Einfederungsvorgang rollt der Rollbalg 6 auf dem Abrollkolben ab, wobei sich der (lichte) Abstand 10 zwischen Abdeckplatte 4 und Abrollkolben 8 entsprechend ändert. Diesen Abstand gilt es zu messen. Zu diesem Zweck befindet sich erfindungsgemäß in der Abdeckplatte 4 ein Rohrstutzen 12 mit einer als Sender und Empfänger ausgebildeten Ultraschall-Komponente 14.

Neben dem Ultraschall-Wandler 14 kann ein Temperaturfühler (nicht dargestellt) zur Messung der in der Luftfeder herrschenden Temperatur angeordnet sein.

Der Rohrstutzen 12 ist so gestaltet, daß der zwischen Ultraschallkomponente 14 und der Oberfläche 16 befindliche Freiraum nicht verstellt ist. Im ausgefederten Zustand der Feder 2 ist der Rohrstutzen 12 in Richtung auf die Mitte des Spanntellers gerichtet. Dort befindet sich eine Reflektor-Komponente 16, die Teil eines (üblichen) Gummipuffers sein kann.

In dem Rohrstutzen 12 befindet sich jeweils quer zur Luftfederachse 18 ein erster 20 und ein zweiter Referenzreflektor 22. Diese Reflektoren 20, 22 können als einfache Drahtbügel ausgebildet sein.

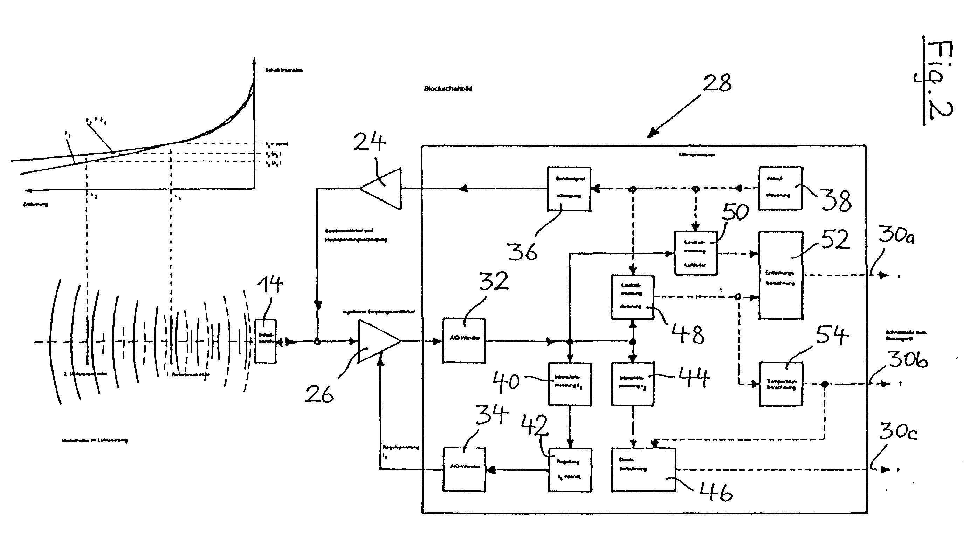

Die für die Messung vorgesehene Elektronik (Fig. 2) weist folgende Baugruppen auf:

Einen Schallwandler 14, einen Senderverstärker 24 nebst Hochspannungserzeugung, einen regelbaren Empfängerverstärker 26 und einen Mikroprozessor 28 mit Schnittstellen s, T und p; 30a, 30b und 30c zum Steuergerät (nicht dargestellt).
Der Mikroprozessor 28 umfaßt folgende Funktionselemente: Zwei A/D-Wandler 32, 34, Sendesignalerzeugung 36, Ablaufsteuerung 38, Intensitätsmessung I, 40, Regelung I₁ = const 42, Intensitätsmessung I₂ 44, Druckberechnung 46, Laufzeitmessung (Referenz) 48, Laufzeitmessung (Luftfeder) 50, Entfernungsberechnung 52 und Temperaturberechnung 54.

Das im Schaltbild (Fig. 2) angegebene System funktioniert wie folgt:

Erfindungsgemäß wird mit Hilfe einer Regeleinheit dafür gesorgt, daß die gemessene Intensität des von dem ersten Reflektor 20 zurückgeworfenen Echos immer konstant bleibt, wozu entweden die Sendeleistung oder die Verstärkung entsprechend geregelt wird.

Diese Intensitätsregelung ist notwendig,
- um Einflüsse des Druckes auf die vom Wandler abgestrahlte Schallleistung zu eliminieren (z. B. sind die Einbettmassen bzgl. ihres Dämpfungsverhaltens temperaturabhängig),
- um Alterungseffekte zu eliminieren (Alterung der Einbett-und Dichtungsmassen).
Gleichzeitig wird die erste Referenzstrecke zur Kalibrierung der Abstandsmessung herangezogen und für die Temperaturmessung benutzt.

Außerdem wird die von dem zweiten Referenzreflektor 22 zurückgeworfene Echoamplitude gemessen. Zusammen mit dem aus der Laufzeitberechnung abgeleiteten Temperaturwert kann aus der Echoamplutude der Druck im Luftfederbalg berechnet werden, der wiederum zur genauen Bestimmung der tatsächlich gegebenen Schallgeschwindigkeit und schließlich zur Bestimmung der Federhöhe dient.

Der Temperaturwert kann aus der Laufzeit des Referenzechos direkt abgeleitet werden. Der Druck braucht nicht zur Bestimmung der Federhöhe herangezogen zu werden.

Man kann also aus der Laufzeit innerhalb der Luftfeder und der Laufzeit einer der beiden Referenzstrecken die genaue Entfernung und die genaue Temperatur bestimmen und aus der Dämpfung zwischen erster und zweiter Referenzstrecke und der Temperatur den Druck berechnen.

D. h.: Ohne Kenntnis der Schallgeschwindigkeit kann die Federhöhe in herkömmlicher Weise (siehe z. B. DE-OS 36 20 957) aus dem Verhältnis der Laufzeiten von Meßstrecke (sᵣ) zu Referenzstrecke (sᵣ₁) bestimmt werden.

Auch kann die Echolaufzeit einer der beiden Referenzreflektoren 20, 22 verwendet werden, um das Wegmeßsystem zu kalibrieren und um die Temperatur im Balg 6 zu messen.

Die Kenntnis des momentan in der Luftfeder 2 herrschenden Drucks dient z. B. als Grundlage zur Berechnung des Beladungszustands bzw. der jeweiligen Radlast.

### Bezugszeichenliste

- 2: Luftfeder
- 4: Abdeckplatte (Bördelplatte)
- 6: Rollbalg
- 8: Abrollkolben
- 10: (lichter) Abstand zwischen Abdeckplatte 4 und Abrollkolben 8
- 12: Rohrstutzen
- 14: Ultraschall-Komponente (Ultraschall-Wandler)
- 16: (Oberfläche des) Spannteller(s), achsfester Reflektor
- 18: Luftfederachse
- 20: erster Referenzreflektor
- 22: zweiter Referenzreflektor
- 24: Senderverstärker nebst Hochspannungserzeugung
- 26: regelbarer Empfängerverstärker
- 28: Mikroprozessor
- 30a,: 30b, 30c Schnittstellen s, T und p zum Steuergerät
- 32,: 34 A/D-Wandler
- 36: Sendesignalerzeugung
- 38: Ablaufsteuerung
- 40: Intensitätsmessung I,
- 42: Regelung I₁ = const
- 44: Intensitätsmessung I₂
- 46: Druckberechnung
- 48: Laufzeitmessung (Referenz)
- 50: Laufzeitmessung (Luftfeder)
- 52: Entfernungsberechnung
- 54: Temperaturberechnung

## Patentansprüche

1. Impuls/Echoverfahren zur berührungslosen Messung des Abstandes zwischen der Achse und dem Chassis eines luftgefederten Fahrzeuges und zur Messung des in der Luftfeder (2) herrschenden Drucks mit Hilfe einer in der Luftfeder (2) angeordneten Ultraschallanordnung,wobei die Ultraschallanordnung die folgenden Bestandteile enthält:
- eine dem Chassis des Fahrzeuges zugeordnete Sende/Empfangskomponente (14)
- einen ersten Referenzreflektor (20)
- einen zweiten Referenzreflektor (22), der von dem ersten Referenzreflektor (20) unterschiedlich entfernt angebracht ist,
- eine achsfeste Reflektor-Komponente (16),
wobei Ultraschallimpulse von der Sende/Empfangskomponente ausgesendet werden und die Luftfederhöhe aus dem Relativwert der Laufzeiten der auf einer der beiden Referenzstrecken und der Messstrecke zurückgelegten Ultraschallimpulse bestimmt wird,
**dadurch gekennzeichnet, dass** das Verfahren zur Messung des in der Luftfeder herrschenden Drucks mit den folgenden Verfahrensschritten durchgeführt wird:
- Ultraschallimpulse werden von der Sende/Empfangskomponente ausgesendet,
- die von dem ersten Referenzreflektor zurückgeworfene Intensität wird gemessen,
- mit Hilfe einer Regeleinheit wird die gemessene Intensität des von dem ersten Reflektor (20) zurückgeworfenen Echos konstant gehalten, wozu entweder die Signalleistung oder die Verstärkung entsprechend geregelt wird,
- die von dem zweiten Referenzreflektor (22) zurückgeworfene Echoamplitude wird mit einer ersten Einrichtung gemessen,
- aus der gemessenen Echoamplitude wird mit Hilfe einer Amplitude/DruckKennlinie und der momentanen Temperatur der Innendruck der Luftfeder (2) bestimmt.

2. Impuls/Echoverfahren nach Anspruch 1, **dadurch gekennzeichnet, dass** die in der Luftfeder (6) herrschende Temperatur aus der Echolaufzeit einer der beiden Referenzstrecken gemessen wird.

3. Vorrichtung zur Durchführung des Impuls/Echoverfahrens nach Anspruch 1, die die folgenden Bestandteile enthält:
- eine dem Chassis des Fahrzeuges zugeordnete Sende/Empfangskomponente (14), die Ultraschallimpulse aussendet
- einen ersten Referenzreflektor (20)
- einen zweiten Referenzreflektor (22), der von dem ersten Referenzreflektor (20) unterschiedlich entfernt angebracht ist,
- eine achsfeste Reflektor-Komponente (16),
**gekennzeichnet durch**
- eine Einrichtung, mit der sowohl die Intensität des von dem ersten Reflektor (20) zurückgeworfenen Echos als auch die Echoamplitude des von dem zweiten Referenzreflektor (22) zurück geworfenen Echos gemessen wird,
- eine Regeleinheit, mit der die gemessene Intensität des von dem ersten Reflektor (20) zurückgeworfenen Echos konstant gehalten wird, wozu entweder die Signalleistung oder die Verstärkung entsprechend geregelt wird,
- eine weitere Einrichtung, mit der aus der vom zweiten Referenzreflektor (22) gemessenen Echoamplitude mit Hilfe einer Amplitude/Druck-Kennlinie und der momentanen Temperatur der in der Luftfeder herrschende Druck bestimmt wird.

4. Vorrichtung nach Anspruch 3, **gekennzeichnet durch** ein Mittel zur Bestimmung der im Luftfederbalg (6) herrschenden Temperatur aus der Laufzeit einer der beiden Referenzreflektor-Echos der Reflektoren (20, 22).

## Claims

1. Pulse/echo method for the contactless measurement of the distance between the axle and the chassis of a vehicle with air suspension and for measuring the pressure prevailing in the air spring (2) using an ultrasonic arrangement which is arranged in the air spring (2), wherein the ultrasonic arrangement contains the following components:
- a transceiver component (14) which is assigned to the chassis of the vehicle,
- a first reference reflector (20),
- a second reference reflector (22) which is mounted at a different distance from the first reference reflector (20), and
- a reflector component (16) which is fixed to the axle,
wherein ultrasonic pulses are emitted by the transceiver component, and the height of air spring is determined from the relative value of the propagation times of the ultrasonic pulses which have travelled on one of the two reference sections and the measurement section,
**characterized in that** the method for measuring the pressure prevailing in the air spring is carried out with the following method steps:
- ultrasonic pulses are emitted by the transceiver component,
- the intensity which is reflected back by the first reference reflector is measured,
- the measured intensity of the echo which is reflected back by the first reflector (20) is kept constant using a control unit, for which purpose either the signal power or the gain is correspondingly adjusted,
- the echo amplitude which is reflected back by the second reference reflector (22) is measured with a first device, and
- the internal pressure of the air spring (2) is determined from the measured echo amplitude using an amplitude/pressure characteristic curve and the instantaneous temperature.

2. Pulse/echo method according to Claim 1, **characterized in that** the temperature prevailing in the air spring (2) is measured from the echo propagation time of one of the two reference sections.

3. Device for carrying out the pulse/echo method according to Claim 1, which contains the following components:
- a transceiver component (14) which is assigned to the chassis of the vehicle and which emits ultrasonic pulses,
- a first reference reflector (20),
- a second reference reflector (22) which is mounted at a different distance from the first reference reflector (20), and
- a reflector component (16) which is fixed to the axle,
**characterized by**
- a device with which both the intensity of the echo reflected back by the first reflector (20) and
- the echo amplitude of the echo reflected back by the second reference reflector (22) are measured,
- a control unit with which the measured intensity of the echo which is reflected back by the first reflector (20) is kept constant, for which purpose either the signal power or the gain is correspondingly controlled, and
- a further device with which the pressure prevailing in the air spring is determined from the echo amplitude measured by the second reference reflector (22), using an amplitude/pressure characteristic curve and the instantaneous temperature.

4. Device according to Claim 3, **characterized by** a means for determining the temperature prevailing in the air spring bellows (6) from the propagation time of one of the two reference reflector echoes of the reflectors (20, 22).

## Revendications

1. Procédé à impulsions/écho pour la mesure sans contact de l'écart entre l'essieu et le châssis d'un véhicule à suspension pneumatique et pour la mesure de la pression qui règne dans l'amortisseur pneumatique (2) à l'aide d'un arrangement à ultrasons disposé dans l'amortisseur pneumatique (2), l'arrangement à ultrasons contenant les composants suivantes :
- un composant d'émission/réception (14) associé au châssis du véhicule,
- un premier réflecteur de référence (20),
- un deuxième réflecteur de référence (22) qui est monté à une distance différente de celle du premier réflecteur de référence (20),
- un composant réflecteur (16) fixe sur l'essieu, des impulsions ultrasoniques étant émises par le composant d'émission/réception et la hauteur de l'amortisseur pneumatique étant déterminée à partir de la valeur relative des temps de propagation des impulsions ultrasoniques renvoyées sur l'un des deux trajets de référence et sur le trajet de mesure, **caractérisé en ce que** le procédé pour la mesure de la pression qui règne dans l'amortisseur pneumatique est exécuté avec les étapes suivantes :
- des impulsions ultrasoniques sont émises par le composant d'émission/réception,
- l'intensité renvoyée par le premier réflecteur de référence est mesurée,
- l'intensité mesurée de l'écho renvoyé par le premier réflecteur (20) est maintenue constante à l'aide d'une unité de régulation en régulant à cet effet en conséquence soit la puissance du signal, soit l'amplification,
- l'amplitude de l'écho renvoyée par le deuxième réflecteur de référence (22) est mesurée avec un premier dispositif,
- la pression interne de l'amortisseur pneumatique (2) est déterminée à partir de l'amplitude d'écho m e s u r é e à l'aide d'une courbe caractéristique amplitude/pression et de la température momentanée.

2. Procédé à impulsions/écho selon la revendication 1, **caractérisé en ce que** la température qui règne dans l'amortisseur pneumatique (2) est mesurée à partir du temps de propagation de l'écho de l'un des deux trajets de référence.

3. Appareil pour mettre en oeuvre le procédé à impulsions/écho selon la revendication 1, lequel contient les composants suivantes :
- un composant d'émission/réception (14) associé au châssis du véhicule et qui émet des impulsions ultrasoniques,
- un premier réflecteur de référence (20),
- un deuxième réflecteur de référence (22) qui est monté à une distance différente de celle du premier réflecteur de référence (20),
- un composant réflecteur (16) fixe sur l'essieu, **caractérisé par**
- un dispositif avec lequel sont mesurées à la fois l'intensité de l'écho renvoyé par le premier réflecteur (20) et l'amplitude d'écho de l'écho renvoyé par le deuxième réflecteur de référence (22),
- une unité de régulation avec laquelle l'intensité mesurée de l'écho renvoyé par le premier réflecteur (20) est maintenue constante en régulant à cet effet en conséquence soit la puissance du signal, soit l'amplification,
- un autre dispositif avec lequel est déterminée la pression qui règne dans l'amortisseur pneumatique à l'aide d'une courbe caractéristique amplitude/pression ainsi que la température momentanée à partir de l'amplitude d'écho mesurée par le deuxième réflecteur de référence (22).

4. Appareil selon la revendication 3, **caractérisé par** des moyens pour déterminer la température qui règne dans le soufflet de l'amortisseur pneumatique (6) à partir du temps de propagation de l'un des deux échos de réflecteur de référence des réflecteurs (20, 22).
